# EUROPEAN PATENT SPECIFICATION

(11) **EP 3 028 183 B1**
(45) Date of publication and mention of the grant of the patent: **09.02.2022**
(21) Application number: 14750956.6
(22) Date of filing: 31.07.2014
(51) Int. Cl.: G06F 16/2452, G06F 16/835

(54) **A GENERIC SQL ENHANCEMENT TO QUERY ANY SEMI-STRUCTURED DATA AND TECHNIQUES TO EFFICIENTLY SUPPORT SUCH ENHANCEMENTS**
GENERISCHE SQL-VERBESSERUNG ZUR ABFRAGE HALBSTRUKTURIERTER DATEN UND VERFAHREN ZUR EFFIZIENTEN UNTERSTÜTZUNG DIESER VERBESSERUNGEN
PERFECTIONNEMENT SQL GÉNÉRIQUE POUR INTERROGER DES DONNÉES SEMI-STRUCTURÉES QUELCONQUES, ET TECHNIQUES POUR PRENDRE EFFICACEMENT EN CHARGE CES PERFECTIONNEMENTS

(30) Priority: 31.07.2013 US 201361860848 P; 21.07.2014 US 201414337189
(43) Date of publication of application: 08.06.2016
(73) Proprietor: Oracle International Corporation, Redwood Shores, CA 94065 (US)
(72) Inventor: LIU, Zhen Hua, Redwood Shores, California 94065 (US); HAMMERSCHMIDT, Beda, Redwood Shores, California 94065 (US)
(74) Representative: Dendorfer, Claus
(86) International application number: PCT/US2014/049290
(87) International publication number: WO 2015/017724

(56) References cited:
- US-A1- 2005 055 355
- US-A1- 2006 047 646
- US-A1- 2008 320 019
- US-B1- 6 507 846
- None

## Description

### FIELD OF THE DISCLOSURE

The present disclosure relates generally to enhancements for supporting the storage and manipulation of semi-structured data in relational database environments.

### BACKGROUND

Relational database management systems (RDBMSs) have been very successful in providing data management for structured data. However, while RDBMSs have become the standard for storing and manipulating structured data, semi-structured data formats are becoming increasingly popular for describing and storing data across a wide variety of applications. Semi-structured data is data in which the values of semantic elements contained in the data may be marked and/or delineated by tags or other markers that organize and possibly describe the semantic elements, but which may not conform to a more formal data model such as a relational data model typically associated with relational databases. Examples of widely used semi-structured data formats include the Extensible Markup Language (XML) and JavaScript Object Notation (JSON).

Because semi-structured data may not conform to any particular formal structure, the storage of semi-structured data in an RDBMS presents a number of challenges. First, relational databases rely on a relational data model which expects data to have a defined and static schema before data can be stored and manipulated. Second, management of data in an RDBMS commonly is implemented using the Structured Query Language (SQL); however, SQL is not designed with native functionality for querying semi-structured data. Instead, semi-structured data formats typically may be associated with separate data format-specific query languages such as XQuery for XML-formatted data and JSONPath for JSON-formatted data.

In order to address these issues and others, separate standards have evolved or are currently evolving to provide support in RDBMSs for particular semi-structured data formats. For example, standards such as SQL/XML for XML data and SQL/JSON for JSON data have been developed or are currently under development to provide the ability to query data stored in RDBMSs based on those particular semi-structured data formats. Standards such as SQL/XML typically provide a set of SQL-based operators that enable users to manage certain semi-structured data formats stored in an RDBMS.

Format-specific standards such as SQL/XML have been successful in enabling users to manage particular semi-structured data formats stored in an RDBMS. However, a format-specific standard is applicable only to a particular semi-structured data format and generally is not extendable to managing other semi-structured data formats that may gain in popularity in the future. In one approach, new semi-structured data format-specific data types and operators could be developed to enable users to manage each newly introduced semi-structured data format. However, adding a new data format-specific data type and set of operators each time a new semi-structured data format is introduced is expensive from both a standards adoption and an RDBMS implementation perspective. Furthermore, many RDBMS clients (e.g., JDBC, ODP, and database import/export functions) may require modification to provide client operability with each new data format-specific data type and set of operators added.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

US 2005/055355 A1 discloses a technique for managing, storing, and accessing unstructured and semi-structured data, such as XML documents, in relational and object-relational database systems. In one embodiment, a storage format for storing XML data comprises two tables. The first table stores the path, value pair and associated hierarchical information for the XML data. The second table assigns unique path identifiers to path strings. XPath expressions are converted into SQL queries to access the stored XML data.

The article "A decade of XML data management: An industrial experience report from Oracle" by Zhen Hua Liu et al., IEEE International Conference on Data Engineering 2009, pages 1351-1362, XP 31447840 A, states that relational database vendors have extended their RDBMSs with the capability of storing, querying and updating XML data in addition to the traditional relational or object relational data. The goal of such hybrid XML and RDBMS systems is to enable users to manage both relational, object relational and XML data in one platform, and to have full interoperability among all their data. The article further mentions "native" XML database vendors. US 2008/320019 A1 teaches a data access service on a web server, wherein the data access service includes 1) server application code, 2) a data access framework, 3) one or more Update Handlers, and 4) a statement generator. Update Handlers enable data having different formats to be inserted or updated into a data store, wherein the data store is a relational database and is not part of the data access service.

### SUMMARY

The present invention is defined by the independent claims. The dependent claims concern optional elements of some embodiments of the present invention.

### BRIEF DESCRIPTION OF THE DRAWINGS

In the drawings:
FIG. 1 is a flow diagram showing steps for processing a query expression including a generic semi-structured data operator;
FIG. 2 is a flow diagram showing steps for compiling a semi-structured data expression contained in a database query using a semi-structured data format-specific implementation module;
FIG. 3 is a block diagram that illustrates a computer system upon which an embodiment of the invention may be implemented.

### DETAILED DESCRIPTION

In the following description, for the purposes of explanation, numerous specific details are set forth in order to provide a thorough understanding of the various inventive embodiments. It will be apparent, however, to one skilled in the art that the present invention may be practiced without these specific details.
1.0 GENERAL OVERVIEW
2.0 EXAMPLE IMPLEMENTATION
   2.1 OPERATORS FOR QUERYING SEMI-STRUCTURED DATA
      2.1.1 VALUE OPERATOR
      2.1.2 EXISTS OPERATOR
      2.1.3 QUERY OPERATOR
      2.1.4 VALIDITY OPERATOR
      2.1.5 TABLE FUNCTION
   2.2 OPERATORS FOR GENERATING SEMI-STRUCTURED DATA FROM RELATIONAL DATA
      2.2.1 OBJECT OPERATOR
      2.2.2 AGGREGATION OPERATOR
   2.3 OPERATORS FOR UPDATING SEMI-STRUCTURED DATA
      2.3.1 UPDATE OPERATOR
   2.4 TECHNIQUES FOR EFFICIENTLY SUPPORTING GENERIC SEMI-STRUCTURED OPERATORS IN A DATABASE SERVER
      2.4.1 OPERATOR IMPLEMENTATION
      2.4.2 OPERATOR MODES
      2.4.3 OTHER ENHANCEMENTS
3.0 HARDWARE OVERVIEW

### 1.0 GENERAL OVERVIEW

The approaches described herein provide an efficient way for a database server to support storage and retrieval for any of a growing number of semi-structured data formats. In one embodiment, a set of generic semi-structured data operators are provided that enable users to query, update, and validate data stored based on any of a number of semi-structured data formats. In this context, a "generic" semi-structured data operator refers a data operator configured to operate on any number of different semi-structured data formats. For example, according to one embodiment, the same set of generic semi-structured data operators are used to operate on data stored according to the XML, JSON, and any number of other semi-structured data formats.

In an embodiment, the use of generic semi-structured data operators allows users to store semi-structured data in database tables using a standard data type (e.g., varchar, varbinary, CLOB, or BLOB data types). After storing semi-structured data into database tables using a standard data type, the generic semi-structured data operators enable users to specify semi-structured query languages expressions to carry out desired operations against the underlying semi-structured data.

The approaches described herein generalize and simplify semi-structured data format-specific solutions such as the SQL/XML standard for XML data and SQL/JSON implementation for JSON data. For example, by using a single set of generic data operators configured to operate on any number of different semi-structured data formats, the addition of a new format-specific data type and format-specific data operators each time support for a new semi-structured data format is desired may be avoided. Further, the generic semi-structured operators may be efficiently executed using approaches compatible with generic SQL engine processing. For example, once semi-structured data is managed by a database server using techniques such as those described herein, semi-structured data operations may take advantage of benefits provided by traditional database servers such as transactions, security, replication, partitioning, parallel execution, and operation completeness.

### 2.0 IMPLEMENTATION EXAMPLES

In one embodiment, a set of generic semi-structured data operators is provided enabling users to query, update, and validate data stored in a database based on any number of different semi-structured data formats. Further presented are techniques illustrating how the operators may be designed and implemented efficiently by a database server.

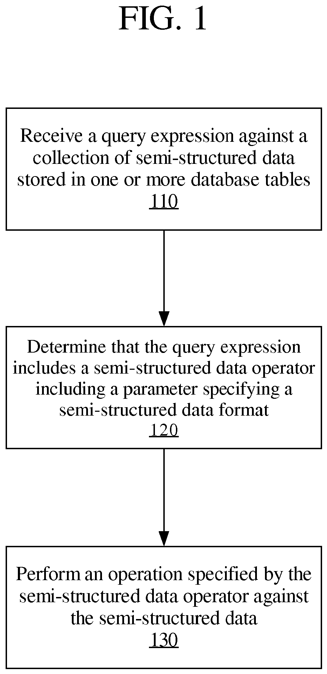

FIG. 1 is a flow diagram of steps for processing a query expression including a generic semi-structured data operator, according to an embodiment. In Step 110, a database server receives a query including a generic semi-structured data operator. The query expression may be query against a collection of semi-structured data stored in one or more database tables. For example, the semi-structured data operator may be one of the generic semi-structured data operators described in more detail in separate sections hereinafter.

In Step 120, the database server determines that the query expression includes a semi-structured data operator. Determining that the query expression includes a semi-structured data operator may include identifying one or more parameters of the semi-structured data operator, including a parameter identifying a particular semi-structured data format. For example, a semi-structured data operator may include a parameter indicating that the query expression is against semi-structured data stored as XML data, JSON data, or based on any other semi-structured data format.

In Step 130, the database server performs an operation specified by the semi-structured data operator against the semi-structured data. For example, the operation may be a query operation to retrieve certain data, an update operation configured to update one or more components of semi-structured data stored in one or more tables, or an operation to verify whether specified data conforms to a particular semi-structured data format. The database server may perform the operation using a library developed for the particular semi-structured data format and/or for a particular semi-structured data query language. For example, the library may be a self-contained module that is registered with the database server, as described further herein.

### 2.1 OPERATORS FOR QUERYING SEMI-STRUCTURED DATA

In one embodiment, a set of generic semi-structured data operators includes one or more operators configured to enable users to query semi-structured data stored in one or more database tables. For example, operators for querying semi-structured data may enable users to obtain a value from semi-structured data, to determine whether one or more conditions exist in semi-structured data, to extract certain data elements from stored data, and other operations described hereinafter.

### 2.1.1 VALUE OPERATOR

In one embodiment, a set of generic semi-structured data operators may include a "value" operator. A value operator generally may be configured to apply a specified semi-structured data query language expression to semi-structured input data. The result of applying the semi-structured query language expression to the input data may be cast to a scalar value of a specified SQL built-in data type (e.g., varchar, CLOB, or LONG). For example, a value operator may be specified in a SQL SELECT, GROUP BY, ORDER BY clause, or any other SQL statement where a SQL built-in data type may be expected.

In an embodiment, input parameters to a semi-structured data value operator may include one or more of a name of a semi-structured data format, a name of an associated semi-structured query language, a semi-structured query language expression, a reference to semi-structured input data, a SQL built-in data type as output, and other options to control error handling behavior of the operator.

For example, the SQL statement below illustrates an example use of a semi-structured data value operator "SSD_VALUE":

```
      SELECT SSD_VALUE('JSON', 'json_path', '$.person.address.city',
       PASSING t.jtext RETURNING VARCHAR(50) NULL ON ERROR)
       FROM TAB t
      ORDER BY SSD_VALUE('JSON', 'json_path',
       '$.person.address.city', PASSING t.jtext RETURNING VARCHAR(50)
      NULL ON ERROR)
```

In the example, a value operator is used in the SELECT clause and includes the parameters "*JSON*", "*json_path*", and "*$.person.address.city*" specifying the name of a semi-structured data format, the name of a semi-structured query language, and a semi-structured query language expression, respectively. For example, the value operator in the SELECT clause may be configured to apply the "*json_path*" language expression "*$.person.address.city*" to the semi-structured input data stored in the jtext column of the table t. The result of applying the expression to the input data is cast to a SQL VARCHAR data type. Additionally, an error control option "*NULL ON ERROR*" is specified indicating that a NULL value is returned if an error occurs during the processing of the semi-structured query language expression.

The example query includes a second value operator in the ORDER BY clause. The second value operator includes the same parameters as the first value operator and may be used to sort the results of the SELECT clause using the native SQL ORDER BY operator.

Although the JSON data format is used in the example above and in other examples hereinafter, the use of the generic semi-structured data operators is not limited to JSON; in general, the semi-structured data operators described herein may be used to query, update, and validate data stored in any semi-structured data format.

### 2.1.2 EXISTS OPERATOR

In one embodiment, a set of generic semi-structured data operators may include an "exists" operator. An exists operator generally may be configured to apply a specified semi-structured query language expression to semi-structured input data and to return a value based on whether one or more items are returned by the expression. If the result of evaluating the expression returns one or more data items, then the operator may return a SQL Boolean true value. If the result of evaluating the expression on the input data does not return any data items, then the operator may return a SQL Boolean false value.

For example, an exists operator may be used in a SQL WHERE clause or in a conditional expression of a SQL CASE expression where a SQL conditional expression is expected. An exists operator may be configured to retrieve one or more rows of a column storing semi-structured data and to determine if the data stored in each row satisfies one or more specified conditions. In one embodiment, input parameters to a semi-structured data exists operator may include one or more of a name of a semi-structured data format, a name of an associated semi-structured query language, a semi-structured query language expression, and a reference to semi-structured input data.

For example, the SQL statement below includes an example use of a semi-structured data exists operator "SSD_EXISTS":

```
      SELECT t.jtext
       FROM TAB t
      WHERE SSD_EXISTS('JSON', 'json_path',
       '$.person.hobbies?.="tennis"?', PASSING t.jtext)
```

In the example query, the exists operator SSD_EXISTS includes parameters "*JSON*", "*json_path*", and "*$.person.hobbies?*.= *"tennis"?*" specifying the name of a semi-structured data format, the name of a semi-structured query language, and a semi-structured query language expression, respectively. During execution of the SSD_EXISTS operator, a database server may be configured to apply the "json_path" query language expression "*$.person.hobbies?.*= *"tennis"?*" to one or more rows of the column t.jtext storing JSON text. The operator may return a Boolean true value, for example, for each row of the t.jtext column for which the predicate *"$.person.hobbies?.*= *"tennis"?*" returns at least one data item. If the exists operator SSD_EXISTS return a Boolean true value for a particular row, then the row containing the JSON data may be returned by the SELECT clause; otherwise, the row is not returned.

### 2.1.3 QUERY OPERATOR

In an embodiment, a set of generic semi-structured data operators may include a "query" operator. A query operator generally may be configured to apply a semi-structured query language expression to specified semi-structured input data and to cast the result of the evaluation to a specified SQL built-in data type. In an embodiment, input parameters to a query operator may include one or more of a semi-structured data format name, a name of an associated semi-structured query language, a semi-structured query language expression, a reference to the input semi-structured data, and a SQL built-in data type for output.

In an embodiment, a semi-structured data query operator may be used in SQL SELECT clauses. For example, a query operator may be used to extract one or more fragments of stored semi-structured data and to return the fragments as a specified SQL data type. In contrast to a value operator described above which is configured to return a scalar value from semi-structured data, a query operator may return formatted semi-structured data.

The following SQL statement illustrates an example use of a semi-structured data query operator "SSD_QUERY":

```
      SELECT SSD_QUERY('JSON', 'json_path', '$.person.address',
       PASSING t.jtext RETURNING CLOB)
       FROM TAB t
```

In the example, the query operator SSD_VALUE includes parameters "*JSON*", "*json_path*", "*$.person.address*" specifying the name of a semi-structured data format, the name of a semi-structured data query language, and a semi-structured data query language expression, respectively. For example, the SSD_QUERY may be configured to apply the "*json_path*" query language expression "*$.person.address*" to a column t.jtext storing JSON text, and to return the result of the evaluation as a CLOB containing semi-structured data representing instances of an "address" object found in the input data.

### 2.1.4 VALIDITY OPERATOR

In one embodiment, a set of generic semi-structured data operators may include a "validity" operator. A validity operator generally may be configured to validate semi-structured input data for conformity with a particular semi-structured data format. For example, a validity operator may return a Boolean true value if the operator determines that specified input data conforms to a particular semi-structured data format. Similarly, if a validity operator determines that specified input data fails to conform to a particular semi-structured data format, the operator may return a Boolean false value. A validity operator may be used, for example, as part of a SQL WHERE clause, or as part of a SQL CHECK constraint to verify input data before it is stored in a database column.

The following SQL statement illustrates an example use of a semi-structured validity operator "SSD_IS_VALID":

```
      SELECT COUNT(∗)
       FROM TAB t
      WHERE SSD_IS_VALID(t.vanchanjtext, 'JSON')
```

In the example, the validity operator SSD_IS_VALID is used in a WHERE clause and includes parameters "*t.varcharjtext*" and "*JSON*" specifying a column storing semi-structured data and the name of a semi-structured data format. For example, the SSD_IS_VALID operator in the WHERE clause may be configured to determine whether data stored in each row of the t.varcharjtext column is validly formatted as JSON data. For example, a validity check generally may include determining whether the stored data conforms to certain syntax requirements for a particular semi-structured data format. In the example query, if the SSD_IS_VALID operator returns a Boolean true value indicating that the data stored in a particular row is validly formatted, then the row may be included in the COUNT aggregation in the SELECT clause.

### 2.1.5 TABLE FUNCTION

In an embodiment, a set of generic semi-structured data operators may include a semi-structured data table function. A table function generally may be configured to map the result of a semi-structured query language expression into one or more relational rows and columns of a virtual table returned by the function. In other words, a semi-structured data table function may be configured to provide a relational projection of semi-structured data. For example, a table function may be included in a SQL FROM clause to create a source table from semi-structured data and which may be operated upon by a SELECT clause.

In an embodiment, a semi-structured data table function may include one or more parameters including a row expression and a set of column expressions. A row expression may specify a semi-structured query language expression to be applied to semi-structured input data, where the result of evaluating the expression is iterated as a set of rows. Each column expression may apply a semi-structured query language expression to the output rows from the row expression to create one or more columns of the table. The parameters to a table function may also include one or more of a name of a semi-structured data format and a name of an associated semi-structured query language.

For example, the SQL statement below includes an example of a semi-structured data table function "SSD_TABLE":

```
      SELECT vt.type, vt.number
       FROM TAB t, SSD_TABLE('JSON', "json_path',
       '$.person.contact.phonelist'
       PASSING t.jtext
              COLUMNS
                     Type varchar(4) PATH '$.type'
                     Number varchar(20) PATH '$.actual-number') vt
      ORDER BY vt.type
```

In the example above, the table function SSD_TABLE includes a "*json_path*" language row expression "*$.person.contact.phonelist*", the evaluation of which is mapped into two varchar columns named "*Type*" and "*Number*" each storing JSON text data. The values stored in the two columns are obtained based on the respective column expressions "*$.type*" and "*$.actual-number*". For example, evaluating the example statement may result in an array of phone lists. The resulting virtual table is aliased with the name "*vt*" which is also referenced in the SELECT clause.

As indicated above, a table function may include a row expression which generates a set of rows which are further operated upon by one or more column expressions to create one or more columns. In one embodiment, a semi-structured data table function may be configured such that a row expression passes a pointer or other reference to sub-components of the semi-structured data to the column expressions for further processing. In this manner, a table function may avoid passing a materialized form of semi-structured data from the row expression to the column expressions, thereby avoiding the overhead of materializing and sending the underlying semi-structured data for processing by the column expressions.

In an embodiment, a semi-structured table function may be chained in order to represent any hierarchical structure of semi-structured data such as a "master/detail" relationship between data items. An intermediate semi-structured data representation may be referenced using a SSD_REFERENCE special type which is used for chaining two or more table functions, but which may or may not be directly referenced in other parts of a SQL statement.

For example, the SQL statement below includes an example of chaining semi-structured data table functions based on a column "*t.jtext*" that stores JSON formatted information about purchase order line items and parts, where the line items and parts may exhibit a hierarchical relationship to one another:

```
      SELECT vt.ItemName, vt2.partName
       FROM TAB t, SSD_TABLE('JSON', 'json_path',
       '$.purchaseorder.lineitem'
       PASSING t.jtext
              COLUMNS
                     ItemName varchar(40) PATH '$.itemName'
                     part SSD_REFERENCE PATH '$.itemPart') vt,
      SSD_TABLE('JSON, 'json_path', '$.parts'
       PASSING vt.part
              COLUMNS
                     partName varchar(20) PATH '$.partName') vt2
      ORDER BY vt.ItemName, vt2.partName
```

In this example, the first table function SSD_TABLE maps a result of evaluating the *"json_path"* expression "*$.purchaseorder.lineitem*" into a virtual table "*vt*" having columns named "*ItemName*" and "*part*." The column expression creating the "*part*" column specifies that the data is to be stored as a SSD_REFERENCE special type. The "*part*" column of type SSD_REFERENCE is then able to be referenced by the second SSD_TABLE function using the "*PASSING vt.part*" parameter. In this manner, the hierarchical relationship between the "*parts*" and "*partName*" values may be extracted and stored in a relational format.

In one embodiment, a semi-structured data reference type, such as the example SSD_REFERENCE type described above, may be implemented by passing a reference to an event stream state to any subsequent table function that operates on the data. In this manner, other table functions may process the data in the event stream state without materializing intermediate result as another semi-structured data instance.

### 2.2 OPERATORS FOR GENERATING SEMI-STRUCTURED DATA FROM RELATIONAL DATA

In an embodiment, a set of generic semi-structured data operators may include one or more operators configured to generate semi-structured data from relational data. For example, operators for generating semi-structured data from relational data may include an object operator and an aggregation operator, described in more detail below.

### 2.2.1 SEMI-STRUCTURED DATA OBJECT OPERATOR

In one embodiment, a set of generic semi-structured data operators may include a semi-structured data "object" operator. A semi-structured data object operator generally may be configured to generate a data object representing semi-structured data based on a set of SQL expressions with associated expression names. The SQL expression names are used as structured "tagging" (e.g., tags that separate semantic elements in the semi-structured data) and the SQL expression values are used as values for the structured tagging.

For example, the following SQL statement illustrates an example of a semi-structured data object operator "SSD_OBJECT":

```
      SELECT SSD_OBJECT('JSON', coll AS "tag1", col2 AS "tag2")
       FROM relational_tab /∗ coll, col2 are columns of the table
       relational_tab ∗/
```

In the example, the semi-structured object operator SSD_OBJECT is configured to generate, for each row of the relational table relational_tab, semi-structured data based on a structure specified by the JSON data format. For example, execution of the example statement may generate a JSON object that includes JSON formatted data such as {"tag1" :col1_val, "tag2" : col2_val} for each row of the table, where col1-val and col2_val represent the values of coll and col2 in each row, respectively.

### 2.2.2 AGGREGATION OPERATOR

In one embodiment, a set of generic semi-structured data operators may include an "aggregation" operator. An aggregation operator generally may be configured to generate an array of semi-structured data object instances by aggregating semi-structured data object instances generated from each row of a relational table.

A data model for a particular semi-structured data format may include not only a representation of semi-structured object data objects according to the particular format, but may also include the concept of a collection of semi-structured data objects. For example, an XQuery sequence is an example of such a collection for XML data; similarly, a JSON array is an example of such a collection for the JSON data format. Thus, whereas a semi-structured data object operator may return a semi-structured data object, an aggregation operator may be configured to return an array or collection of semi-structured data objects.

The following SQL statement illustrates an example use of a semi-structured data aggregation operator "SSD_OBJ_AGGREGATE":

```
      SELECT SSD_OBD_AGGREGATE(SSD_OBDECT('JSON', coll AS "tag1",
       col2 AS "tag2"))
       FROM relational_tab /∗ coll, col2 are columns of the
       relational_tab ∗/
```

In the example, the semi-structured data object operator SSD_OBJECT is configured to generate semi-structured data objects based on the specified JSON format for each row of the relational table relational_tab. The aggregation operator SSD_OBJ_AGGREGATE may then generate a JSON array object containing elements {"tag1" :col1_val, "tag2" : col2_val} generated from each row of the relational table relational_tab.

In an embodiment, a semi-structured data aggregation operator which specifies a nested semi-structured data object operator, such as in the example above, may be evaluated using a "top-down" evaluation approach in order to avoid generating repeated copies of the semi-structured data object operator for operation by the parent aggregation operator. For example, evaluation of a semi-structured data aggregation operator may create one destination event stream that is passed to each nested semi-structured data object operator so that the object operators may write the results of the object operator into the event stream.

In one embodiment, a SQL statement that includes a semi-structured data aggregation operator and a semi-structured data table function may be algebraically optimized due to inverse nature of the operations performed by the operators. For example, an aggregation operator is configured to create semi-structured data from relational data, whereas a table function is configured to create relational data from semi-structured data. Similarly, a semi-structured data value operator and semi-structured data object operator represent inverse operations and may also be algebraically optimized during query optimization.

### 2.3 OPERATORS FOR UPDATING SEMI-STRUCTURED DATA

In an embodiment, a set of generic semi-structured data operators may include one or more operators configured to update semi-structured data stored. For example, the operators may include an update operator, described in more detail hereinafter.

### 2.3.1 UPDATE OPERATOR

In an embodiment, a set of semi-structured data operators may include an "update" operator. An update operator generally may be configured to modify, insert, or delete specified components of semi-structured data stored in one or more tables of a database. In an embodiment, input parameters to an update operator may include one or more of a name of a semi-structured data format, a name of an associated semi-structured query language, and one or more particular update operations. Each update operation, for example, may specify a semi-structured query language expression identifying data to be updated and possibly other parameters depending on the type of update operation.

For example, the following SQL statement illustrates an example of a generic semi-structured data update operator SSD_UPDATE:

```
      UPDATE tab t
      SET t.jtext USING
      SSD_UPDATE('json', 'json_path',
       set('$.person.firstname', 'john'),
       set('$.person.lastname', 'smith'),
      delete('$.person.salary'),
       insert('$.person.phone', '(555)555-8619'))
```

In the example, an update operator SSD_UPDATE is used as part of the SQL SET operator and is configured to apply semi-structured query language evaluations to the semi-structured input data to update, delete, and insert individual components of semi-structured data. The SSD_UPDATE operator in the example includes four separate operations for updating, deleting, and inserting data, indicated by the set, delete, and insert parameters. The result of applying the SSD_UPDATE operator may update the underlying semi-structured data stored in varchar, varbinary, CLOB or BLOB columns.

### 2.4 TECHNIQUES FOR EFFICIENTLY SUPPORTING GENERIC SEMI-STRUCTURED OPERATORS IN A DATABASE SERVER

### 2.4.1 OPERATOR IMPLEMENTATION

According to an embodiment, a set of generic semi-structured data operators as described herein may be implemented as native operators of a database server kernel. By implementing the operators as native operators rather than, for example, as user-defined functions, database performance may be increased. Similarly, according to one embodiment, a generic semi-structured data table function may be implemented as a native row source of a database server kernel and optimized to handle table-based operations. In general, a row source is an iterative control structure that processes a set of input rows (e.g., one or more rows of a source table containing semi-structured data) in an iterated manner and produces a set of output rows (e.g., one or more relational rows containing the processed semi-structured data).

In an embodiment, for each semi-structured data format and semi-structured data query language for which support is desired, a self-contained implementation module may be separately linked into a database server. In this context, a self-contained implementation module may expose a set of interfaces that a set of generic semi-structured data operators may invoke in order to carry out the operations of the generic semi-structured data operators for a particular semi-structured data format. A database server may provide a framework for the generic semi-structured data operators to invoke the implementation modules, which may be separately registered with the database server.

In an embodiment, a self-contained implementation module for a particular semi-structured data format includes a compiler interface configured to compile semi-structured query language expressions contained in a query. The compiler interface may be configured to store resulting plans for executing the semi-structured query language expressions as part of the execution plan for the SQL query that invokes one or more semi-structured operators containing the expressions. By implementing a compiler interface as part of the self-contained implementation module, a database server may avoid run-time compilation of semi-structured query language expressions on a per row basis. For example, if a query operates on many rows of a table and an operation on each row involves the same semi-structured query language expression, the compiler interface of an implementation module may be used to generate bytecode instructions for implementing the query language expression and the bytecode may be cached in the query plan for run time execution by the database server.

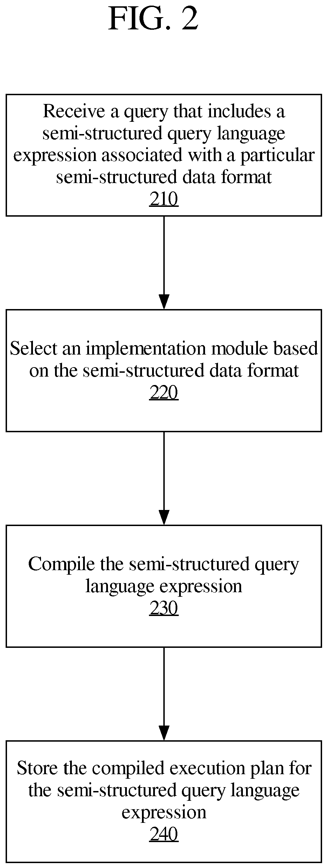

FIG. 2 is a flow diagram showing steps for compiling a semi-structured data expression contained in a database query using a semi-structured data format-specific implementation module. In Step 210, a database server receives a database query including a semi-structured query language expression associated with a particular semi-structured data format. The semi-structured query language expression, for example, may be specified as a parameter to a semi-structured data operator included in the query. The semi-structured data operator may, for example, include one of the operators described herein such as a value operator, exists operator, query operator, etc. In an embodiment, the particular semi-structured data format may also be specified as a parameter to the semi-structured data operator, or the data format may be determined based on the syntax of the query expression.

In Step 220, the database server selects a particular implementation module based on the semi-structured data format. For example, if the particular semi-structured data format is determined to be the JSON data format, the database server may select an implementation module that provides functionality for processing JSON query expressions. As another example, if the particular semi-structured data format is XML, an XML-specific implementation module may be selected. As described above, the various implementation modules may be separately linked into the database server depending on the types of semi-structured data to be processed.

In Step 230, the semi-structured query language expression is compiled to generate an execution plan for the expression. The execution plan provides a set of steps the database server may use to carrying out the specified processing steps against the semi-structured data specified in the query expression. As described above, each implementation module may include a compiler interface configured to receive and compile semi-structured query language expressions for a particular semi-structured data format.

In Step 240, an execution plan generated by the implementation module for the semi-structured query language expression is stored as part of a query execution plan for the query containing the semi-structured query language expression. As indicated above, by storing the execution plan for the semi-structured query language expression as part of the execution plan for the query containing the expression, runtime compilation of the data format-specific query expressions may be avoided.

### 2.4.2 OPERATOR MODES

In an embodiment, a self-contained implementation module for a particular semi-structured data format may include a run time interface configured to return results of semi-structured query language expressions in one of three modes: "existence" mode, an "all mode", and an "iterator" mode. The "existence" mode may be used, for example, by an exists operator and implemented using "lazy" evaluation techniques; for example, as soon as any results become available based on evaluating a semi-structured query language expression specified as a parameter to an exists operator, the exists operator can return a value without fully evaluating the semi-structured query language expression.

In contrast, an "all" mode may be used, for example, by a semi-structured data value operator or query operator. The all mode may be implemented using "eager" evaluation techniques; for example, the semantics of the value and query operators operate on entire semi-structured query language evaluation results and, thus, all data specified by the operators may be retrieved for each operator instance.

In an embodiment, an "iterator" mode may be used, for example, by a table function or other operator that generates a set of rows. The iterator mode may also be implemented using "lazy" evaluation techniques as the results available from a table function are typically consumed in an iterator fashion. For example, another operator calling a table function may stop consuming rows generated by the table function at any time based on criteria specified in the operator.

### 2.4.3 OTHER ENHANCEMENTS

Semi-structured data may be represented in either a textual or binary form. Processing semi-structured data represented as text by parsing stored textual data during run time may be more expensive than operating on a binary form of the semi-structured data. In one embodiment, a database table may store both a textual representation of semi-structured data in one or more columns of a database table, and a corresponding binary representation of the same data may be stored in one or more hidden columns of the same table. The binary version of the data may be used in some instances for runtime processing instead of the textual version of the data. For example, a database server may provide the ability to process semi-structured data in binary form using a binary functional index over the base storage column of the textual semi-structured data.

In various embodiments, other native database functionality may be used to improve processing of certain semi-structured data operators. For example, functional indexes on a semi-structured data value operator and materialized relational views on a semi-structured data table function may be used to improve query response time in certain instances. As another example, inverted indexes may be created to index certain semi-structured data stored in one or more tables. An inverted index may be used, for example, to improve evaluation of a semi-structured data exists operator by indexing the data elements stored in a column of semi-structured data, thereby simplifying checks for certain data elements.

In an embodiment, evaluation of certain semi-structured query language statements such as those specified in a table function or exists operator, may use lazy evaluation techniques based on event stream processing of stored semi-structured data. For example, a semi-structured data table operator or exists operator may be configured to produce event streams from stored semi-structured data to facilitate lazy evaluation of the data.

### 3.0 HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

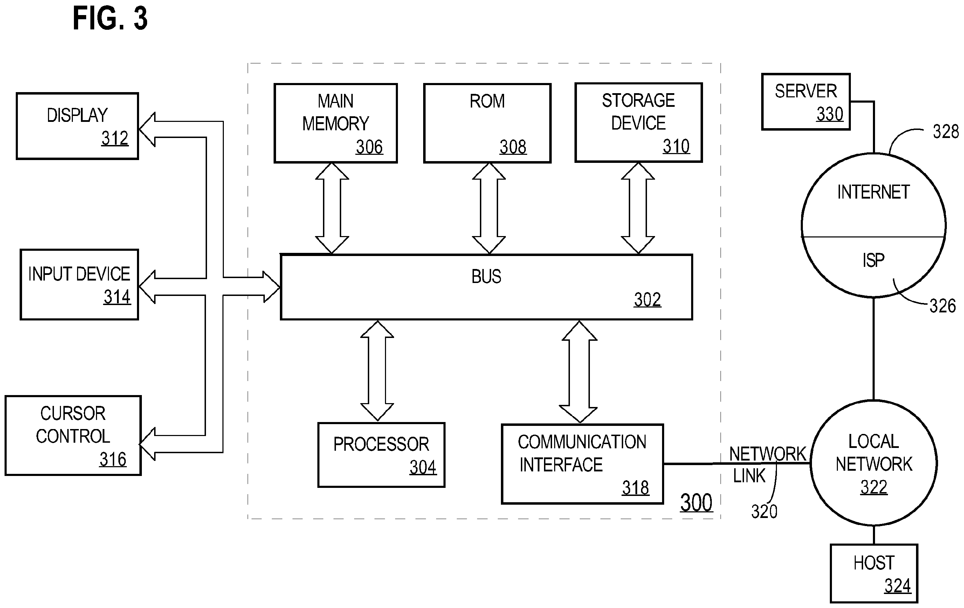

For example, FIG. 3 is a block diagram that illustrates a computer system 300 upon which an embodiment of the invention may be implemented. Computer system 300 includes a bus 302 or other communication mechanism for communicating information, and a hardware processor 304 coupled with bus 302 for processing information. Hardware processor 304 may be, for example, a general purpose microprocessor.

Computer system 300 also includes a main memory 306, such as a random access memory (RAM) or other dynamic storage device, coupled to bus 302 for storing information and instructions to be executed by processor 304. Main memory 306 also may be used for storing temporary variables or other intermediate information during execution of instructions to be executed by processor 304. Such instructions, when stored in non-transitory storage media accessible to processor 304, render computer system 300 into a special-purpose machine that is customized to perform the operations specified in the instructions.

Computer system 300 further includes a read only memory (ROM) 308 or other static storage device coupled to bus 302 for storing static information and instructions for processor 304. A storage device 310, such as a magnetic disk or optical disk, is provided and coupled to bus 302 for storing information and instructions.

Computer system 300 may be coupled via bus 302 to a display 312, such as a cathode ray tube (CRT), for displaying information to a computer user. An input device 314, including alphanumeric and other keys, is coupled to bus 302 for communicating information and command selections to processor 304. Another type of user input device is cursor control 316, such as a mouse, a trackball, or cursor direction keys for communicating direction information and command selections to processor 304 and for controlling cursor movement on display 312. This input device typically has two degrees of freedom in two axes, a first axis (e.g., x) and a second axis (e.g., y), that allows the device to specify positions in a plane.

Computer system 300 may implement the techniques described herein using customized hard-wired logic, one or more ASICs or FPGAs, firmware and/or program logic which in combination with the computer system causes or programs computer system 300 to be a special-purpose machine. According to one embodiment, the techniques herein are performed by computer system 300 in response to processor 304 executing one or more sequences of one or more instructions contained in main memory 306. Such instructions may be read into main memory 306 from another storage medium, such as storage device 310. Execution of the sequences of instructions contained in main memory 306 causes processor 304 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 310. Volatile media includes dynamic memory, such as main memory 306. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 302. Transmission media can also take the form of acoustic or light waves, such as those generated during radio-wave and infra-red data communications.

Various forms of media may be involved in carrying one or more sequences of one or more instructions to processor 304 for execution. For example, the instructions may initially be carried on a magnetic disk or solid state drive of a remote computer. The remote computer can load the instructions into its dynamic memory and send the instructions over a telephone line using a modem. A modem local to computer system 300 can receive the data on the telephone line and use an infra-red transmitter to convert the data to an infra-red signal. An infra-red detector can receive the data carried in the infra-red signal and appropriate circuitry can place the data on bus 302. Bus 302 carries the data to main memory 306, from which processor 304 retrieves and executes the instructions. The instructions received by main memory 306 may optionally be stored on storage device 310 either before or after execution by processor 304.

Computer system 300 also includes a communication interface 318 coupled to bus 302. Communication interface 318 provides a two-way data communication coupling to a network link 320 that is connected to a local network 322. For example, communication interface 318 may be an integrated services digital network (ISDN) card, cable modem, satellite modem, or a modem to provide a data communication connection to a corresponding type of telephone line. As another example, communication interface 318 may be a local area network (LAN) card to provide a data communication connection to a compatible LAN. Wireless links may also be implemented. In any such implementation, communication interface 318 sends and receives electrical, electromagnetic or optical signals that carry digital data streams representing various types of information.

Network link 320 typically provides data communication through one or more networks to other data devices. For example, network link 320 may provide a connection through local network 322 to a host computer 324 or to data equipment operated by an Internet Service Provider (ISP) 326. ISP 326 in turn provides data communication services through the world wide packet data communication network now commonly referred to as the "Internet" 328. Local network 322 and Internet 328 both use electrical, electromagnetic or optical signals that carry digital data streams. The signals through the various networks and the signals on network link 320 and through communication interface 318, which carry the digital data to and from computer system 300, are example forms of transmission media.

Computer system 300 can send messages and receive data, including program code, through the network(s), network link 320 and communication interface 318. In the Internet example, a server 330 might transmit a requested code for an application program through Internet 328, ISP 326, local network 322 and communication interface 318.

The received code may be executed by processor 304 as it is received, and/or stored in storage device 310, or other non-volatile storage for later execution.

In the foregoing specification, embodiments of the invention have been described with reference to numerous specific details that may vary from implementation to implementation. The specification and drawings are, accordingly, to be regarded in an illustrative rather than a restrictive sense. The sole and exclusive indicator of the scope of the invention, and what is intended by the applicants to be the scope of the invention, is defined by the appended claims.

## Claims

1. A method comprising:
a database server receiving (110, 210) a query expression to evaluate against a collection of semi-structured data stored in one or more tables of a database, wherein the query expression includes a semi-structured data operator;
wherein the semi-structured data operator includes an identification of the operator and a plurality of parameters, wherein a first parameter of the plurality of parameters specifies a semi-structured data format from a plurality of available semi-structured data formats, and a second parameter of the plurality of parameters specifies a semi-structured query language expression;
in response to receiving the query expression, performing:
generating a first execution plan for the query expression, wherein generating the first execution plan includes:
based on the semi-structured data format specified by the first parameter, the database server selecting (220) a semi-structured data format-specific implementation module;
the implementation module receiving, at a compiler interface, the semi-structured query language expression, and compiling (230) the semi-structured query language expression to generate a second execution plan for the semi-structured query language expression;
storing (240) the generated second execution plan as part of the first execution plan;
executing the first execution plan, including evaluating, according to the second execution plan, the semi-structured query language expression specified by the second parameter against the collection of semi-structured data, which is stored in the one or more tables of the database in the semi-structured data format specified by the first parameter;
wherein the method is performed by one or more computing devices.

2. The method of Claim 1,
wherein the query expression is a first query expression, the semi-structured data operator is a first semi-structured data operator, and the semi-structured data format is a first semi-structured data format;
receiving a second query expression including a second semi-structured data operator having the same identification as the first semi-structured operator, wherein the second semi-structured data operator specifies a second semi-structured data format that is different than the first semi-structured data format;
in response to receiving the second query expression, performing the operation against the semi-structured data.

3. The method of Claim 1, wherein the semi-structured data operator is a value operator, and wherein evaluating the semi-structured query language expression involves: applying the semi-structured query language expression to specified input data, extracting a value from the specified input data, and casting the value to a SQL data type.

4. The method of Claim 1, wherein the semi-structured data operator is an exists operator, and wherein evaluating the semi-structured query language expression involves: applying the semi-structured query language expression to specified input data, and returning a value based on whether or not the expression returns one or more data items.

5. The method of Claim 1, wherein the semi-structured data operator is a query operator, and wherein evaluating the semi-structured query language expression involves: applying the semi-structured query language expression to specified input data, and returning a result that is part of the specified input data.

6. The method of Claim 1, wherein the semi-structured data operator is a table function which maps a result of the semi-structured query language expression into one or more relational rows and columns.

7. The method of Claim 1, wherein the semi-structured data operator is an update operator which modifies, inserts, or deletes one or more components of the semi-structured data.

8. The method of Claim 1, wherein the semi-structured data operator processes a set of input rows and produces a set of output rows.

9. The method of any of Claims 1-8, wherein the query expression operates on a plurality of rows of a table of the one or more tables, and an operation on each row of the plurality of rows involves the semi-structured query language expression.

10. The method of any of Claims 1-9, wherein the second execution plan comprises bytecode instructions for implementing the semi-structured query language expression, the bytecode instructions being cached in the first execution plan for run time execution by the database server.

11. The method of any of Claims 1-10, wherein the semi-structured data operator further includes a third parameter which specifies a semi-structured data query language.

12. The method of any of Claims 1-11, wherein semi-structured data comprises values that are delineated by markers that describe the values.

13. The method of any of Claims 1-12, wherein the particular semi-structured data format is either the Extensible Markup Language, XML, or JavaScript Object Notation, JSON.

14. One or more storage media storing instructions which, when executed by one or more processors, cause performance of the method recited in any of Claims 1-13.

## Patentansprüche

1. Verfahren, das umfasst:
ein Datenbankserver erhält (110, 210) einen Abfrageausdruck, der bezüglich einer Sammlung von semistrukturierten Daten, die in einer Tabelle oder mehreren Tabellen einer Datenbank gespeichert sind, auszuwerten ist, wobei der Abfrageausdruck einen Operator für semistrukturierte Daten aufweist;
wobei der Operator für semistrukturierte Daten eine Bezeichnung des Operators und eine Mehrzahl von Parametern aufweist, wobei ein erster Parameter der Mehrzahl von Parametern ein Format für semistrukturierte Daten aus einer Mehrzahl von verfügbaren Formaten für semistrukturierte Daten angibt, und ein zweiter Parameter der Mehrzahl von Parametern einen Ausdruck einer Sprache für semistrukturierte Abfragen angibt;
ansprechend auf den Empfang des Abfrageausdrucks wird ausgeführt:
ein erster Ausführungsplan für den Abfrageausdruck wird erzeugt, wobei das Erzeugen des ersten Ausführungsplans umfasst:
beruhend auf dem Format für semistrukturierte Daten, das durch den ersten Parameter angegeben wird, wählt (220) der Datenbankserver ein Implementierungsmodul aus, das spezifisch für das Format für semistrukturierte Daten ist;
das Implementierungsmodul erhält, an einer Compilerschnittstelle, den Ausdruck der Sprache für semistrukturierte Abfragen und kompiliert (230) den Ausdruck der Sprache für semistrukturierte Abfragen, um einen zweiten Ausführungsplan für den Ausdruck der Sprache für semistrukturierte Abfragen zu erzeugen;
der erzeugte zweite Ausführungsplan wird als Teil des ersten Ausführungsplan gespeichert (240);
der erste Ausführungsplan wird ausgeführt, was beinhaltet, dass der durch den zweiten Parameter angegebene Ausdruck der Sprache für semistrukturierte Abfragen gemäß dem zweiten Ausführungsplan bezüglich der Sammlung von semistrukturierten Daten, die in der einen Tabelle oder den mehreren Tabellen der Datenbank in dem durch den ersten Parameter spezifizierten Format für semistrukturierte Daten gespeichert ist, ausgewertet wird;
wobei das Verfahren durch eine Recheneinrichtung oder mehrere Recheneinrichtungen ausgeführt wird.

2. Verfahren nach Anspruch 1,
wobei der Abfrageausdruck ein erster Abfrageausdruck ist, der Operator für semistrukturierte Daten ein erster Operator für semistrukturierte Daten ist, und das Format für semistrukturierte Daten ein erstes Format für semistrukturierte Daten ist;
Empfangen eines zweiten Abfrageausdrucks, der einen zweiten Operator für semistrukturierte Daten mit der gleichen Bezeichnung wie der erste Operator für semistrukturierte Daten aufweist, wobei der zweite Operator für semistrukturierte Daten ein zweites Format für semistrukturierte Daten angibt, das sich von dem ersten Format für semistrukturierte Daten unterscheidet;
ansprechend auf den Empfang des zweiten Abfrageausdrucks wird die Operation bezüglich der semistrukturierten Daten ausgeführt.

3. Verfahren nach Anspruch 1, wobei der Operator für semistrukturierte Daten ein Wertoperator ist, und wobei das Auswerten des Ausdrucks der Sprache für semistrukturierte Abfragen umfasst: Anwenden des Ausdrucks der Sprache für semistrukturierte Abfragen auf spezifizierte Eingabedaten, Extrahieren eines Wertes aus den spezifizierten Eingabedaten, und Casting des Wertes in einen SQL-Datentyp.

4. Verfahren nach Anspruch 1, wobei der Operator für semistrukturierte Daten ein "Existiert"-Operator ist, und wobei das Auswerten des Ausdrucks der Sprache für semistrukturierte Abfragen umfasst: Anwenden des Ausdrucks der Sprache für semistrukturierte Abfragen auf spezifizierte Eingabedaten, und Zurückgeben eines Wertes beruhend darauf, ob der Ausdruck ein oder mehrere Datenelemente zurückgibt oder nicht.

5. Verfahren nach Anspruch 1, wobei der Operator für semistrukturierte Daten ein Abfrageoperator ist, und wobei das Auswerten des Ausdrucks der Sprache für semistrukturierte Abfragen umfasst: Anwenden des Ausdrucks der Sprache für semistrukturierte Abfragen auf spezifizierte Eingabedaten, und Zurückgeben eines Ergebnisses, das Teil der spezifizierten Eingabedaten ist.

6. Verfahren nach Anspruch 1, wobei der Operator für semistrukturierte Daten eine Tabellenfunktion ist, die ein Ergebnis des Ausdrucks der Sprache für semistrukturierte Abfragen in eine oder mehrere relationale Zeilen und Spalten abbildet.

7. Verfahren nach Anspruch 1, wobei der Operator für semistrukturierte Daten ein Aktualisierungsoperator ist, der eine Komponente oder mehrere Komponenten der semistrukturierten Daten modifiziert, einfügt oder löscht.

8. Verfahren nach Anspruch 1, bei dem der Operator für semistrukturierte Daten einen Satz von Eingabezeilen verarbeitet und einen Satz von Ausgabezeilen erzeugt.

9. Verfahren nach einem der Ansprüche 1-8, wobei der Abfrageausdruck auf eine Mehrzahl von Zeilen einer Tabelle der einen Tabelle oder der mehreren Tabellen angewendet wird, und wobei eine Operation bezüglich jeder Zeile der Mehrzahl von Zeilen mit dem Ausdruck der Sprache für semistrukturierte Abfragen in Beziehung steht.

10. Verfahren nach einem der Ansprüche 1 bis 9, wobei der zweite Ausführungsplan Bytecode-Anweisungen zum Implementieren des Ausdrucks der Sprache für semistrukturierte Abfragen umfasst, wobei die Bytecode-Anweisungen in dem ersten Ausführungsplan zur Ausführung zur Laufzeit durch den Datenbankserver zwischengespeichert werden.

11. Verfahren nach einem der Ansprüche 1-10, wobei der Operator für semistrukturierte Daten ferner einen dritten Parameter aufweist, der eine Abfragesprache für semistrukturierte Daten angibt.

12. Verfahren nach einem der Ansprüche 1-11, wobei semistrukturierte Daten Werte umfassen, die durch Markierungen, die die Werte beschreiben, abgegrenzt sind.

13. Verfahren nach einem der Ansprüche 1-12, wobei das bestimmte Format für semistrukturierte Daten entweder die *Extensible Markup Language*, XML, oder die *JavaScript Object Notation*, JSON, ist.

14. Ein Speichermedium oder mehrere Speichermedien, auf dem/denen Befehle gespeichert sind, die, wenn sie von einem Prozessor oder mehreren Prozessoren ausgeführt werden, bewirken, dass das in einem der Ansprüche 1-13 genannten Verfahren ausgeführt wird.

## Revendications

1. Procédé comprenant :
un serveur de base de données recevant (110, 210) une expression de consultation à évaluer par rapport à un recueil de données semi-structurées stockées dans une ou plusieurs tables d'une base de données, l'expression de consultation incluant un opérateur de données semi-structurées,
dans lequel l'opérateur de données semi-structurées inclut une identification de l'opérateur et une pluralité de paramètres, un premier paramètre de la pluralité de paramètres spécifiant un format de données semi-structurées à partir d'une pluralité de formats disponibles de données semi-structurées, et un second paramètre de la pluralité de paramètres spécifiant une expression en langage semi-structuré de consultation,
en réponse à la réception de l'expression de consultation, la réalisation :
de la génération d'un premier plan d'exécution pour l'expression de consultation, la génération du premier plan d'exécution incluant :
sur la base du format de données semi-structurées spécifié par le premier paramètre, la sélection (220) par le serveur de base de données d'un module d'implémentation spécifique de format de données semi-structurées,
la réception par le module d'implémentation, au niveau d'une interface de compilateur, de l'expression en langage semi-structuré de consultation, et la compilation (230) de l'expression en langage semi-structuré de consultation pour générer un second plan d'exécution pour l'expression en langage semi-structuré de consultation,
le stockage (240) du second plan d'exécution généré comme partie du premier plan d'exécution,
de l'exécution du premier plan d'exécution, ce qui comprend l'évaluation, en fonction du second plan d'exécution, de l'expression en langage semi-structuré de consultation spécifié par le second paramètre par rapport au recueil de données semi-structurées, qui sont stockés dans la ou les tables de la base de données dans le format de données semi-structurées spécifié par le premier paramètre,
le procédé étant effectué par un ou plusieurs dispositifs informatiques.

2. Procédé selon la revendication 1,
dans lequel l'expression de consultation est une première expression de consultation, l'opérateur de données semi-structurées est un premier opérateur de données semi-structurées et le format de données semi-structurées est un premier format de données semi-structurées,
la réception d'une seconde expression de consultation incluant un second opérateur de données semi-structurées présentant la même identification que le premier opérateur semi-structuré, le second opérateur de données semi-structurées spécifiant un second format de données semi-structurées qui est différent du premier format de données semi-structurées,
en réponse à la réception de la seconde expression de consultation, l'exécution de l'opération par rapport aux données semi-structurées.

3. Procédé selon la revendication 1, dans lequel l'opérateur de données semi-structurées est un opérateur de valeurs, et dans lequel l'évaluation de l'expression en langage semi-structuré de consultation met enjeu l'application de l'expression en langage semi-structuré de consultation pour spécifier des données d'entrée, l'extraction d'une valeur des données d'entrée spécifiées et la distribution de la valeur en un type de données en langage SQL.

4. Procédé selon la revendication 1, dans lequel l'opérateur de données semi-structurées est un opérateur EXISTS, et dans lequel l'évaluation de l'expression en langage semi-structuré de consultation met enjeu l'application de l'expression en langage semi-structuré de consultation sur des données d'entrée spécifiées et le renvoi d'une valeur sur la base de ce que l'expression a renvoyé un ou plusieurs éléments de données.

5. Procédé selon la revendication 1, dans lequel l'opérateur de données semi-structurées est un opérateur de consultation, et dans lequel l'évaluation de l'expression en langage semi-structuré de consultation met enjeu l'application de l'expression en langage semi-structuré de consultation sur des données d'entrée spécifiées et le renvoi d'un résultat qui fait partie des données d'entrée spécifiées.

6. Procédé selon la revendication 1, dans lequel l'opérateur de données semi-structurées est une fonction TABLE qui mappe le résultat de l'expression en langage semi-structuré de consultation dans une ou plusieurs rangées et colonnes relationnelles.

7. Procédé selon la revendication 1, dans lequel l'opérateur de données semi-structurées est un opérateur de mise à jour qui modifie, insère ou supprime un ou plusieurs composants des données semi-structurées.

8. Procédé selon la revendication 1, dans lequel l'opérateur de données semi-structurées traite un ensemble de rangées d'entrée et génère un ensemble de rangées de sortie.

9. Procédé selon l'une quelconque des revendications 1 à 8, dans lequel l'expression de consultation fonctionne sur une pluralité de rangées d'une table parmi la ou les tables, et une opération sur chaque rangée de la pluralité de rangées met enjeu l'expression en langage semi-structuré de consultation.

10. Procédé selon l'une quelconque des revendications 1 à 9, dans lequel le second plan d'exécution comprend des instructions en code à octets permettant de d'implémenter l'expression en langage semi-structuré de consultation, les instructions en code à octets étant mises en cache dans le premier plan d'exécution en vue d'une exécution par le serveur de base de données.

11. Procédé selon l'une quelconque des revendications 1 à 10, dans lequel l'opérateur de données semi-structurées inclut en outre un troisième paramètre qui spécifie un langage de consultation de données semi-structurées.

12. Procédé selon l'une quelconque des revendications 1 à 11, dans lequel les données semi-structurées comprennent des valeurs qui sont définies par des marqueurs qui décrivent les valeurs.

13. Procédé selon l'une quelconque des revendications 1 à 12, dans lequel le format particulier de données semi-structuré est soit le langage de balisage extensible, XML, soit la notation en objet JavaScript, JSON.

14. Support unique ou multiple de stockage contenant des instructions qui, lorsqu'elles sont exécutées par un ou plusieurs processeurs, provoquent la réalisation du procédé décrit dans l'une quelconque des revendications 1 à 13.
